Europäisches Patentamt

European Patent Office

Office européen des brevets

(19)

(11) **EP 1 083 414 A1**

(12) **EUROPÄISCHE PATENTANMELDUNG**

(43) Veröffentlichungstag:
**14.03.2001 Patentblatt 2001/11**

(51) Int Cl.[7]: **G01F 23/284**, H01P 1/08

(21) Anmeldenummer: **99118150.4**

(22) Anmeldetag: **11.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Endress + Hauser GmbH + Co.**
**79689 Maulburg (DE)**

(72) Erfinder: **Reimelt, Ralf**
**79211 Freiburg (DE)**

(74) Vertreter: **Redding, Anke Dipl.-Phys.**
**Endress + Hauser (Deutschland) Holding GmbH**
**PatServe - Patentabteilung**
**Colmarer Strasse 6**
**79576 Weil am Rhein (DE)**

(54) **Füllstandsmessgerät**

(57) Es ist ein Füllstandsmeßgerät zur Messung eines Füllstandes eines Füllgutes (1) in einem Behälter (3) vorgesehen, bei dem mittels einer elektronischen Schaltung (5) erzeugte elektromagnetische Signale (S) über einen Wellenleiter (17) in den Behälter (3) hinein und an einer Füllgutoberfläche reflektierte Signale (R) herausgeführt werden, bei dem dem Wellenleiter (17) eine in einem Frequenzbereich mit einer Bandbreite wirksame Impedanzanpassung vorgeschaltet ist. Hierzu umfaßt das Füllstandsmeßgerät eine Einkopplung (15, 15'), die die Signale (S) von der Schaltung (5) auf den Wellenleiter (17) überträgt und die einen Innenleiter (19) aufweist, welcher Innenleiter (19) zur Erhöhung des Wellenwiderstandes einen Leiterabschnitt (45, 45') mit einer von einer Zylinderform abweichenden Geometrie aufweist.

FIG. 2

**Beschreibung**

Die Erfindung betrifft ein Füllstandsmeßgerät zur Messung eines Füllstandes eines Füllgutes in einem Behälter, bei dem eine elektronische Schaltung elektromagnetische Signale erzeugt, die über eine Einkopplung auf einen in den Behälter hinein ragenden Wellenleiter übertragen werden. Dieser führt die Signale in den Behälter hinein und an einer Füllgutoberfläche reflektierte Signale heraus. Die reflektierten Signale werden einer Empfangs- und Auswerteschaltung zugeführt, die daraus den Füllstand ermittelt.

Als Wellenleiter können dabei sowohl ein einziger als auch zwei oder mehr parallel zueinander angeordnete Wellenleiter dienen, die sich von einem Punkt oberhalb des höchsten zu messenden Füllstandes nach unten in den Behälter hinein erstrecken. Als Wellenleiter eignen sich z.B. blanke auch als Sommerfeld-Wellenleiter bezeichnete Metalldrähte, oder mit einer Isolation versehene Metalldrähte. Letztere sind auch unter der Bezeichnung Goubau-Wellenleiter bekannt.

Mit elektromagnetischen Signalen arbeitende Füllstandsmeßgeräte sind in einer Vielzahl von Anwendungen, sowohl in der Lagerhaltung als auch in der verarbeitenden Industrie, z.B. in der Chemie, in der Lebensmittelindustrie und in der Ölindustrie, einsetzbar.

In der DE-U 94 21 870 ist ein Füllstandsmeßgerät zur Messung eines Füllstandes eines Füllgutes in einem Behälter angegeben, welches umfaßt:

- eine elektronische Schaltung zur Erzeugung von elektromagnetischen Signalen,
- einen in den Behälter hinein ragenden Wellenleiter,

-- der die Signale in den Behälter hinein und an einer Füllgutoberfläche reflektierte Signale heraus führt, und

- eine Einkopplung,

-- die die Signale von der Schaltung auf den Wellenleiter überträgt und
-- die einen Innenleiter aufweist.

Eine elektronische Schaltung zur Erzeugung der elektromagnetischen Signale sowie eine Empfangs- und Auswerteschaltung ist z.B. in der EP-A 780 665 beschrieben.

Bei dem Füllstandsmeßgerät gemäß der DE-U 94 21 870 sind die Signale kurze elektromagnetische Impulse die an der Oberfläche des Füllguts reflektiert werden. Die Einkopplung ist eine koaxiale Durchführung mit einem Innenleiter und einem Außenleiter. Eine erste Seite der Durchführung ist über eine Koaxialleitung mit der elektronischen Schaltung verbunden. An einer gegenüberliegenden zweiten Seite der Einkopplung geht der Innenleiter in den Wellenleiter über.

Der Wellenwiderstand der Koaxialleitung liegt üblicherweise bei 50 Ω, der des Wellenleiters ist frequenzabhängig und beträgt z.B. einige 100 Ω.

Am Übergang vom reinen Koaxialleiter zum Wellenleiter ist deshalb bei dem Füllstandsmeßgerät gemäß der DE-U 94 21 870 an den Außenleiter der Durchführung ein den Wellenleiter koaxial umgreifender Trichter angeformt. Dieser dient dazu Impedanzsprünge und Reflexionen im Bereich des Übergangs zu vermeiden.

Der Trichter kann nicht nur zur Impedanzanpassung sondern auch zur Verbesserung der Anpassung der Ausbreitungsmoden dienen.

Die Abmessungen eines Trichters sind in Abhängigkeit von der Wellenlänge der elektromagnetischen Signale zu wählen. Je größer die Wellenlänge ist, um so größer muß auch der Trichter ausgebildet sein, damit er die gewünschte Impedanz- und/oder Modenanpassung erzielt. Kurze elektromagnetische Impulse weisen jedoch regelmäßig nicht nur eine Frequenz sondern ein Frequenzspektrum mit einer Bandbreite auf. Das Spektrum ist nach unten z.B. durch einen Gleichanteil mit 0 Hz begrenzt. Die obere Grenze hängt von der Art der Pulserzeugung ab. Bei einem Frequenzspektrum von z.B. 0 Hz bis zu 1,5 GHz liegen die kürzesten auftretenden Wellenlängen bei ca. 0,2 m. Eine obere Grenze für auftretende Wellenlängen gibt es nicht. Eine Auslegung des Trichters ist nur für eine der auftretenden Frequenzen möglich. Da ein sehr großer Anteil der Energie bei einem Impuls in Signalkomponenten mit niedrigen Frequenzen enthalten ist, müßte der Trichter sehr groß sein, um wenigstens für diese Komponenten eine hinreichende Impedanzanpassung zu bieten. Ist der Tichter für die niedrigen Frequenzen groß genug, so ist er auch für höhere Frequenzen geeignet.

Auch ein großer Trichter bietet keine optimale Anpassung und er benötigt viel Platz. Dieser Platz ist jedoch häufig, z.B. wenn das Füllstandsmeßgerät nur eine kleine Öffnung im Behälter zur Verfügung steht, nicht vorhanden. Es werden diese Füllstandsmeßgeräte daher regelmäßig ohne Trichter eingesetzt.

Es ist eine Aufgabe der Erfindung ein Füllstandsmeßgerät zur Messung eines Füllstandes eines Füllgutes in einem Behälter anzugeben, bei dem mittels einer Schaltung erzeugte elektromagnetische Signale über einen Wellenleiter in den Behälter hinein und an einer Füllgutoberfläche reflektierte Signale herausgeführt werden, bei dem dem Wellenleiter eine in einem Frequenzbereich mit einer Bandbreite wirksame Impedanzanpassung vorgeschaltet ist.

Hierzu besteht die Erfindung in einem Füllstandsmeßgerät zur Messung eines Füllstandes eines Füllgutes in einem Behälter, welches umfaßt:

- eine elektronische Schaltung zur Erzeugung von elektromagnetischen Signalen,
- einen in den Behälter hinein ragenden Wellenleiter,

-- der die Signale in den Behälter hinein und an einer Füllgutoberfläche reflektierte Signale heraus führt, und

- eine Einkopplung,

-- die die Signale von der Schaltung auf den Wellenleiter überträgt und
-- die einen Innenleiter aufweist,

--- welcher Innenleiter zur Erhöhung des Wellenwiderstandes einen Leiterabschnitt mit einer von einer Zylinderform abweichenden Geometrie aufweist.

Gemäß einer Weiterbildung der Erfindung ist der Leiterabschnitt ein Wendelleiter.

Gemäß einer Ausgestaltung nimmt die Anzahl Windungen, die der Wendelleiter pro Längeneinheit aufweist, in wellenleiter-zugewandter Richtung hin zu.

Gemäß einer Ausgestaltung weist der Wendelleiter eine mittlere Anzahl Windungen pro Längeneinheit auf, die so gewählt ist, daß der Wellenwiderstand der Einkopplung im Bereich des Leiterabschnitts ungefähr gleich der Quadratwurzel eines Produktes des Ausgangswellenwiderstands der elektronischen Schaltung und des Wellenwiderstands des Wellenleiters ist.

Gemäß einer Ausgestaltung ist die Einkopplung eine koaxiale Durchführung mit einem Innenleiter und einem Außenleiter, die eine über eine Koaxialleitung mit der elektronischen Schaltung verbundene erste Seite aufweist und die eine zweite Seite aufweist, an der der Innenleiter in den Wellenleiter übergeht.

Gemäß einer Ausgestaltung dient die Einkopplung zur mechanischen Befestigung des Füllstandsmeßgeräts an einem Meßort und zur Befestigung des Wellenleiters.

Gemäß einer Ausgestaltung weist das Füllstandsmeßgerät eine Empfangs- und Auswerteschaltung auf, die die reflektierten Signale empfängt und daraus den Füllstand ermittelt.

Die Erfindung und deren Vorteile werden nun anhand der Figuren der Zeichnung, in denen zwei Ausführungsbeispiele dargestellt sind, näher erläutert; gleiche Elemente sind in den Figuren mit denselben Bezugszeichen versehen.

Fig. 1 zeigt eine schematische Darstellung eines Füllstandsmeßgeräts, eine Schaltung zur Erzeugung von elektromagnetischen Signalen und eine Empfangs- und Auswerteschaltung;

Fig. 2 zeigt eine schematische Darstellung einer Einkopplung mit einem Wendelleiter mit konstanter Anzahl Windungen pro Längeneinheit; und

Fig. 3 zeigt eine schematische Darstellung einer Einkopplung mit einem Wendelleiter bei dem die Anzahl Windungen pro Längeneinheit variiert.

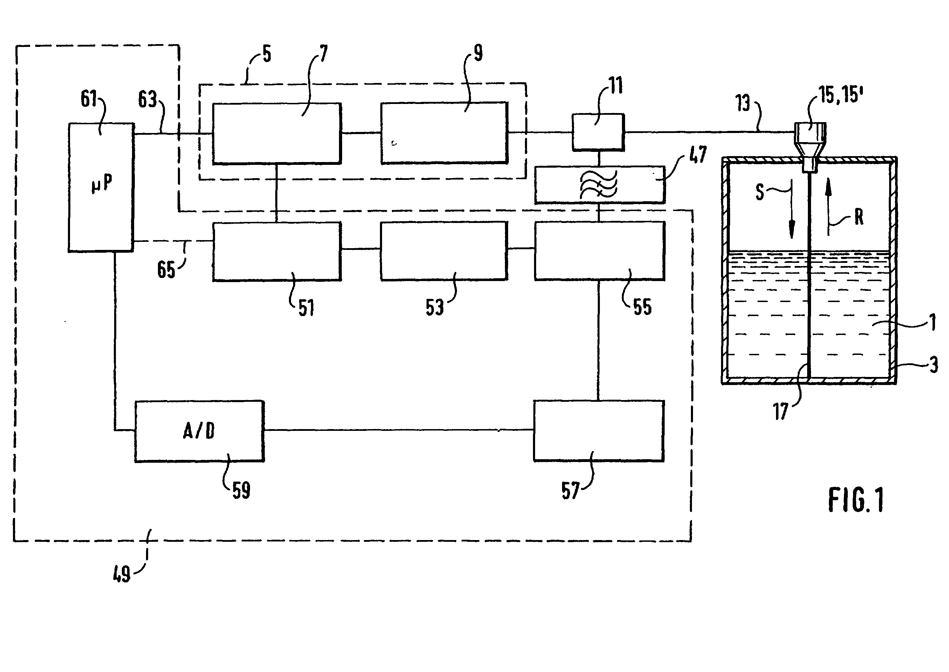

Fig. 1 zeigt eine schematische Darstellung eines Füllstandsmeßgeräts. Es dient zur Messung eines Füllstandes eines Füllguts 1 in einem Behälter 3 und weist eine elektronische Schaltung 5 zur Erzeugung von elektromagnetischen Signalen S auf. Die elektronische Schaltung 5 weist bei dem dargestellten Ausführungsbeispiel einen Sendetaktgeber 7 und einen Sendeimpulsgenerator 9 auf. Ein Sendetakt des Sendetaktgebers 7 ist dem Sendeimpulsgenerator 9 zugeführt. Vorzugsweise wird ein Sendeimpulsgenerator 9 verwendet, der elektromagnetische Signale erzeugt, die die Form von niederenergetischen hochfrequenten kurzen Pulsen haben. Derartige Sendeimpulsgeneratoren sowie in Verbindung damit verwendbare elektronische Schaltungen und Empfangs-und Auswerteschaltungen sind z.B. in der US-A 5,345,471 und der US-A 5,361,070 beschrieben. Es sind Pulse mit einer Spitzenleitung von weniger als 1 µW und einer effektiven Leistung von 1 nW oder weniger mit Frequenzen von 100 MHz und mehr erzeugbar. Die Sendetaktrate beträgt z.B. einige MHz.

Die elektromagnetischen Signale S werden im Betrieb über einen Richtkoppler 11 mittels einer Koaxialleitung 13 zu einer Einkopplung 15 geführt.

Die Einkopplung 15 überträgt die elektromagnetischen Signale S auf einen in den Behälter 3 hinein ragenden Wellenleiter 17. Dieser führt die Signale S in den Behälter 3 hinein und an einer Füllgutoberfläche reflektierte Signale R wieder heraus.

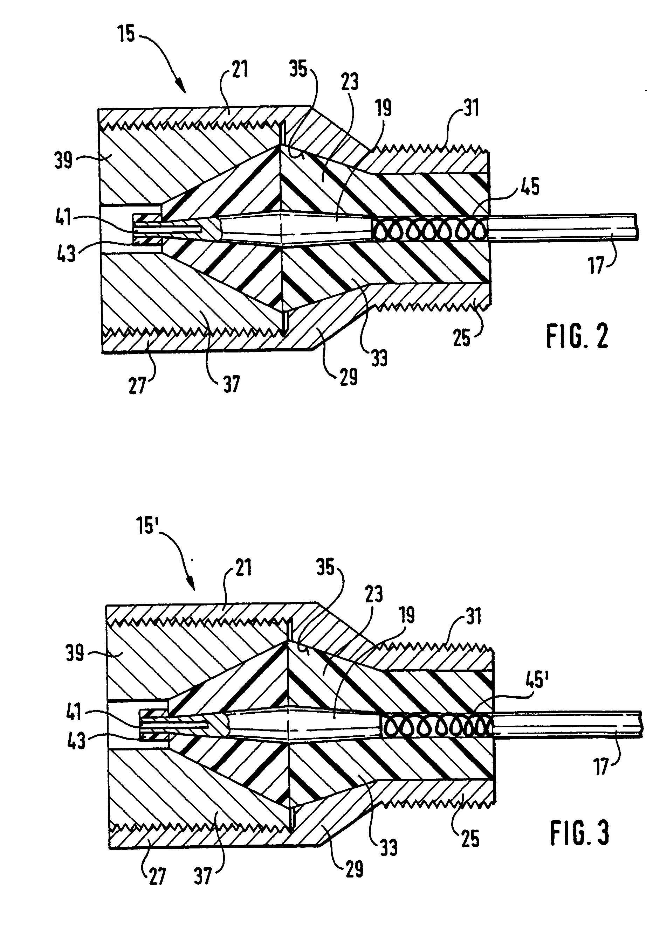

Der Wellenleiter 17 ist z.B. ein mechanisch starrer Stab oder ein mechanisch starrer Draht. Genauso ist aber auch ein gespanntes Seil einsetzbar, dessen eines Ende an der Einkopplung 15 und dessen anderes Ende an einem Boden des Behälters 3 befestigt ist. Anstelle einer Befestigung des anderen Endes am Behälterboden kann an dem anderen Ende auch ein Gewicht befestigt sein, durch das das Seil gespannt wird. Es können sowohl blanke Stäbe, Drähte oder Seile aus Metall, z.B. aus einem Edelstahl, als auch mit einer Isolation versehene Metalldrähte, -stäbe oder -seile verwendet werden. Als Isolator eignet sich z.B. Polytetraflourethylen (PTFE).
Die Einkopplung 15 ist, wie in Fig. 1 lediglich schematisch dargestellt, in einer Öffnung des Behälters 3 montiert. Fig. 2 zeigt ein Ausführungsbeispiel einer Einkopplung 15. Die Einkopplung 15 ist eine koaxiale Durchführung mit einem Innenleiter 19 und einem Außenleiter 21. Ein zwischen dem Innenleiter 19 und dem Außenleiter 21 verbleibender Hohlraum ist von einem Einsatz 23 aus einem Dielektrikum ausgefüllt.

Der Außenleiter 21 weist ein äußeres Element auf, das aus zwei hohlzylindrischen Abschnitten 25, 27 besteht, die durch ein konisches Rohrstück 29 miteinander verbunden sind. Der hohlzylindrische Abschnitt 25 mit dem geringeren Durchmesser ist im eingebauten Zustand einem Behälterinnenraum zugewandt.

Bei dem gezeigten Ausführungsbeispiel dient die Einkopplung 15 auch zur mechanischen Befestigung des Füllstandsmeßgeräts an einem Meßort. Hierzu ist an dem hohlzylindrischen Abschnitt 25 ein Außengewinde 31 angeformt, mittels dessen die Einkopplung 15 in ein in der Öffnung des Behälters 3 angeordnetes Innengewinde einschraubbar ist. Alternativ kann die Einkopplung 15 einen Flansch aufweisen, der auf einem die Öffnung umgebenden Gegenflansch befestigbar ist. Andere dem Fachmann bekannte Befestigungsarten sind ebenfalls verwendbar.

Der Einsatz 23 weist ein erstes Teilstück 33 auf, welches den Innenraum des hohlzylindrischen Abschnitts 25 und des konischen Rohrstücks 29 ausfüllt. Das erste Teilstück 33 weist zur Aufnahme des Innenleiters 19 eine durchgehende Bohrung auf. An einem behälter-abgewandten Ende weist die Bohrung einen Abschnitt auf in dem der Durchmesser in behälter-abgewandter Richtung zunimmt, so daß endseitig eine konische innere Mantelfläche 35 vorliegt. Der Innenleiter 19 weist eine formgleiche konische äußere Mantelfläche auf mit der er auf der konischen inneren Mantelfläche 35 des Einsatzes 23 aufliegt.

An den Abschnitt des Innenleiters 19, dessen Durchmesser in behälter-abgewandter Richtung zunimmt schließt sich in behälter-abgewandter Richtung ein Abschnitt an, dessen Durchmesser in behälter-abgewandter Richtung abnimmt. Auf letzteren ist ein zweites Teilstück 37 des Einsatzes 23 aufgesetzt. Das zweite Teilstück 37 ist kegelstumpfförmig und weist eine durchgehende Bohrung auf, deren Durchmesser in behälter-abgewandter Richtung abnimmt, so daß das zweite Teilstück 37 an dem darin eingeschlossenen Abschnitt des Innenleiters 19 eng anliegt.

Der Außenleiter 21 weist ein inneres Element 39 auf, das mittels eines daran angeformten Außengewindes in den zylindrischen Abschnitt 27 des äußeren Elements eingeschraubt ist. Es weist eine axiale Bohrung auf, an die in behälter-zugewandter Richtung eine Ausnehmung zur Aufnahme des zweiten kegelstumpfförmigen Teilstücks 37 des Einsatzes 23 anschließt.

Der Innenleiters 19 weist an dessen behälter-abgewandten Ende eine axiale Sacklochbohrung 41 auf und ist endseitig von einem Ringzylinder 43 aus einem Dielektrikum umgeben. Der Ringzylinder 43 grenzt an den Einsatz 23 an. Zwischen dem Ringzylinder 43 und dem inneren Element 39 des Außenleiters 21 besteht ein ringzylindrischer Spalt. Diese Formgebung ermöglicht den Anschluß der Koaxialleitung 13 mittels eines handelsüblichen in Fig. 2 nicht dargestellten Steckers an dieser ersten Seite der Einkopplung 15. An einer gegenüberliegenden zweiten Seite der Einkopplung 15 geht der Innenleiter 19 in den Wellenleiter 17 über. Innenleiter 19 und Wellenleiter 17 können ein einziges Bauteil sein.

Die beiden konischen Mantelflächen des Innenleiters 19 bewirken eine Einspannung des Innenleiters 19 in dem Einsatz 23. Analog bewirken die beiden konischen äußeren Mantelflächen des Einsatzes 23 eine Einspannung des Einsatzes 23 in dem Außenleiter 21. Da der Wellenleiter 17 fest mit dem Innenleiter 17 verbunden ist, dient die Einkopplung 15 somit auch zur mechanischen Befestigung des Wellenleiters 17.

Der Koaxialleiter 13 weist üblicherweise einen Wellenwiderstand von 50 Ω auf und bildet den Ausgangswellenwiderstand der elektronischen Schaltung 5. Der Wellenwiderstand des Wellenleiters 17 weist dagegen Werte von einigen 100 Ω auf. Ohne eine geeignete Impedanzanpassung würde an diesem Übergang ein großer Anteil der Signale reflektiert werden und es wäre nur ein geringer Anteil der Signalleistung für die Füllstandsmessung nutzbar. Für eine Impedanzanpassung ist es erforderlich, daß der Wellenwiderstand im Bereich der Einkopplung 15 größer als der Ausgangswellenwiderstand der elektronischen Schaltung 5 und kleiner als der des Wellenleiters 17 ist.

Es wäre denkbar, den Wellenwiderstand durch eine Vergrößerung des Durchmessers zu erhöhen. Dies ist jedoch ungeeignet, da bei den meisten Anwendungen der am Meßort zur Verfügung stehende Raum begrenzt ist. Eine Reduzierung des Durchmessers des Innenleiters 19 scheidet in der Regel aus Gründen der mechanischen Stabilität aus. Bei einem Außenleiterdurchmesser von einigen Zentimetern müßte der Innenleiter 19 einen Durchmesser von deutlich weniger als einem Millimeter aufweisen damit ein Wellenwiderstand in der Größenordnung von 150 Ω besteht.

Erfindungsgemäß wird die Impedanzanpassung erreicht, indem der Innenleiter 19 einen im Inneren der Einkopplung 15 angeordneten Leiterabschnitt 45 aufweist, der zur Erhöhung des Wellenwiderstandes eine von einer Zylinderform abweichende Geometrie aufweist. Prinzipiell bewirkt jede Abweichung der Zylinderform eine Erhöhung des Wellenwiderstands. So ist es z.B. denkbar, den Leiterabschnitt 45 mit Einkerbungen oder ringförmigen umlaufenden Rillen auszubilden. Diese Aussparungen vermindern den Kapazitätsbelag. Durch diese Formgebungen wird der Wellenwiderstand erhöht, ohne daß der Außendurchmesser der Einkopplung 15 hierdurch vergrößert wird. Auch bleibt die mechanische Stabilität des Innleiters 19 im wesentlichen unverändert.

Vorzugsweise ist der Leitungsabschnitt 45, wie in Fig. 2 dargestellt, ein Wendelleiter. Bei einem Wendelleiter erfolgt die Ausbreitung der Signale nahezu ungestört, während bei der Einfügung von kapazitiven Elementen geometrie-bedingt parasitäre Effekte auftreten könnten. Um die Enstehung höherer Moden möglichst vollständig zu vermeinden, ist der Abstand zweier aufeinanderfolgender Wendel vorzugsweise klein gegenüber der Wellenlänge der gewünschten Moden.

Ein weiterer Vorteil des Wendelleiters ist, daß praktische keine Dispersion auftritt. Die eingespeisten Signale bleiben in ihrer Form erhalten.

Der Wellenwiderstand Z eines Koaxialleiters, bei dem der Innenleiter ein Wellenleiter ist, ist durch die nachfolgende Gleichung bestimmt:

$$Z = 60\,\Omega\,\ln(D/d)\,[1 + \frac{(n\,\pi\,d)^2}{2\,\ln(D/d)}\,(1 - (d/D)^2)]^{1/2}$$

wobei

D ein Innendurchmesser des Außenleiters des Koaxialleiters,
d ein Außendurchmesser des Wendelleiters und
n eine Anzahl Windungen pro Längeneinheit ist.

Der Innendurchmesser D des Außenleiters des Koaxialleiters und der Außendurchmesser d des Wendelleiters sind in der Regel durch einen Durchmesser der Behälteröffnung und durch die Vorgabe einer Mindestbelastbarkeit des Innenleiters 19 auf Zug und Druck nur in sehr eingeschränktem Rahmen wählbar. Mit der Anzahl der Windungen pro Längeneinheit n steht dagegen erstmals eine Stellgröße zur Verfügung die man zur Anpassung des Wellenwiderstands Z frei wählen kann.

In Fig. 3 ist eine weitere Einkopplung 15' dargestellt, die sich von der in Fig. 2 dargestellten lediglich in der Ausbildung des Wendelleiter unterscheidet.

Bei dem in Fig. 2 dargestellten Ausführungsbeispiel ist die Anzahl Windungen pro Längeneinheit n des Wellenleiters über die gesamte Länge des Leiterabschnitts 45 konstant. Bei dem in Fig. 3 dargestellten Ausführungsbeispiel nimmt die Anzahl Windungen pro Längeneinheit n` des Leiterabschnitts 45` in wellenleiter-zugewandter Richtung hin zu. Hierdurch ist ein kontinuierlicher Anstieg des Wellenwiderstands von der Koaxialleitung 13 zum Wendelleiter 17 realisierbar.

Bei beiden Ausführungsbeispielen ist eine mittlere Anzahl Windungen pro Längeneinheit vorzugsweise so gewählt, daß der Wellenwiderstand der Einkopplung 15, 15` im Bereich des Leiterabschnitts 45, 45` ungefähr gleich der Quadratwurzel eines Produktes des Ausgangswellenwiderstands der elektronischen Schaltung 5 und des Wellenwiderstands des Wellenleiters 17 ist. Der Ausgangswiderstand der elektronischen Schaltung 5 entspricht bei den gezeigten Ausführungsbeispielen jeweils dem Wellenwiderstand der Koaxialleitung 13.

Aufgrund der von der Zylinderform abweichenden Geometrie des Leiterabschnitts 45, 45` ist somit eine Impedanzanpassung realisiert, durch die erheblich geringere Eingangsreflektionen beim Übergang vom Koaxialleiter 13 zum Wellenleiter 17 auftreten, ohne daß der Durchmesser der Einkopplung 15, 15` vergrößert oder der Durchmesser des Innenleiters 19 verkleinert wird. Damit sind sehr stabile und kompakte Füllstandsmeßgeräte realisierbar.

Die Reduktion der Eingangsreflektionen wirkt sich sowohl beim Einführen der Signale S als auch bei der Aufnahme der an der Füllgutoberfläche reflektierten Signale R positiv aus. Untersuchungen haben gezeigt, daß sich die Amplitude eines an der Füllgutoberfläche reflektierten Signales R durch die erfindungsgemäße Ausbildung des Leiterabschnitts des Innenleiters 19 nahezu verdoppeln läßt. Damit sind Füllstände von Medien mit sehr geringer Dielektrizitätskonstante erfaßbar und/oder es können längere Wellenleiter 17 eingesetzt werden.

Durch die erfindungsgemäße Impedanzanpassung wird erreicht, daß von der Einkopplung herrührende Reflexionen nicht nur eine geringere Amplitude aufweisen, es wird auch ein Zeitbereich, indem von Reflexionen im Bereich der Einkopplung herrührende Signale in die Empfangs- und Auswerteschaltung 49 gelangen schmaler, da insb. Mehrfachreflexionen sehr viel seltener auftreten. In dem vorgenannten Zeitbereich ist keine Füllstandsmessung möglich, da eine von der Füllgutoberfläche erzeugte Reflexion nicht von einer Reflexion innerhalb der Einkopplung 15, 15` unterschieden werden kann. Eine Verkürzung dieses Zeitbereichs bewirkt folglich eine Vergrößerung des Meßbereichs.

Ein an der Füllgutoberfläche reflektiertes Signal R ist über den Wellenleiter 17, die Einkopplung 15, den Richtkoppler 11 und einen Hochpass 47 einer Empfangs- und Auswerteschaltung 49 zugeführt, die dieses empfängt, eine Laufzeit des elektromagnetischen Signals S von der elektronischen Schaltung 5 zur Füllgutoberfläche und des reflektierten Signals R von der Füllgutoberfläche zur Empfangs- und Auswerteschaltung 49 bestimmt und daraus den Füllstand ermittelt.

Die Ausbreitungsgeschwindigkeit der elektromagnetischen Signale und die Abstände zwischen der elektronischen Schaltung 5 und dem Behälterboden und zwischen der Empfangs- und Auswerteschaltung 49 und dem Behälterboden sind entweder ohnehin bekannt oder können durch einfache Referenzmessungen erhalten werden. Mit diesen Daten ergibt sich aus der gemessenen Laufzeit die Höhe des Füllstands.

Fig. 1 zeigt ein Ausführungsbeispiel eines Blockschaltbilds der Empfangs- und Auswerteschaltung 49. Die elektronische Schaltung 5 und die Empfangs- und Auswerteschaltung 49 sind vorzugsweise in einem, in Fig. 1 nicht dargestellten, mit der Einkopplung 9 verbundenen Gehäuse untergebracht.

Die elektromagnetischen Signale werden über die Einkopplung 15, 15` dem Wellenleiter 17 zugeführt. Umgekehrt gelangen entlang des Wellenleiters 17 reflektierte Signale R über den Wellenleiter 7, die Einkopplung 15, 15`, den Richtkoppler 11 und den dem Richtkoppler 11 nachgeschalteten Hochpaß 47 zur Empfangs- und Auswerteschaltung 49.

Die Empfangs- und Auswerteschaltung 49 umfaßt eine Zeitverzögerung 51, an deren Eingang der Sendetakt des Sendetaktgenerators 7 anliegt und die einen Abtasttakt erzeugt, der dem um eine variable Verzögerungszeit verzögerten Sendetakt entspricht. Die variable Verzögerungszeit wird z.B. mittels eines Sägezahngenerators bereitgestellt. Der Abtasttakt ist einem Abtastimpulsgenerator 53 zugeführt, der in Abhängigkeit vom Abtasttakt Abtastimpulse generiert und einem ersten Eingang einer Abtast- und Halte Schaltung 55 zuführt. Abtast- und Sendeimpulsgenerator 9, 53 sind vorzugsweise identisch, so daß sich die von ihnen erzeugten elektromagnetischen Signale lediglich um die variable Verzögerungszeit unterscheiden.

Die reflektierten Signale R liegen über den Richtkoppler 11 und den Hochpaß 47 an einem zweiten Eingang der Abtast- und Halteschaltung 55 an.

Im Betrieb werden vorzugsweise periodisch mit der Sendetaktfrequenz kurze Sendepulse erzeugt und die reflektierten Echosignale der Abtast- und Halteschaltung 55 zugeführt. Dort wird jedem Echosignal ein Abtastimpuls überlagert und ein daraus resultierendes Gesamtsignal aufgenommen, mittels eines nachgeschalteten Verstärkers 57 verstärkt, mittels eines in Serie zu dem Verstärker 57 angeordneten Analog-Digital-Wandler 59 digitalisiert und einem Mikroprozessor 61 als Abtastwert zugeführt.

Das Gesamtsignal ist ein Maß für die Übereinstimmung von Echosignal und Abtastimpuls. Die Echosignale treffen periodisch ein und aufeinanderfolgende Abtastimpulse unterscheiden sich voneinander durch die gemäß einer Sägezahnfunktion verlaufende Zeitverzögerung. Unter der Voraussetzung, daß sich aufeinanderfolgende Echosignale nicht wesentlich unterscheiden, liefert die Abtast- und Halteschaltung 55 eine stroboskopische Aufzeichnung der Echosignale. Diese Voraussetzung ist typischerweise immer erfüllt, da sich der Füllstand in dem Zeitraum zwischen zwei Sendepulsen praktisch nicht ändert.

Der Mikroprozessor 61 ist über eine erste Leitung 63 mit dem Sendetaktgenerator 7 und über eine zweite Leitung 65 mit dem Abtasttaktgenerator 53 verbunden. Im Betrieb startet der Mikroprozessor 61 regelmäßig Meßzyklen. Während eines Meßzyklusses werden die elektromagnetischen Signale wie zuvor beschrieben periodisch erzeugt und die reflektierten Signale R abgetastet. Ein Meßzyklus endet wenn alle gemäß der Sägezahnfunktion vorgesehenen Zeitverzögerungen durchlaufen wurden. Es werden die einzelnen Abtastwerte jeweils in Verbindung mit der zugeordneten momentanen Verzögerung aufgezeichnet. Dies ergibt einen Meßsignalverlauf aus dem die Laufzeit bestimmbar ist.

**Patentansprüche**

1. Füllstandsmeßgerät zur Messung eines Füllstandes eines Füllgutes (1) in einem Behälter (3), welches umfaßt:

   - eine elektronische Schaltung (5) zur Erzeugung von elektromagnetischen Signalen (S),

   - einen in den Behälter (3) hinein ragenden Wellenleiter (17),

     -- der die Signale (S) in den Behälter (3) hinein und an einer Füllgutoberfläche reflektierte Signale (R) heraus führt, und

   - eine Einkopplung (15, 15`),

     -- die die Signale (S) von der Schaltung (5) auf den Wellenleiter (17) überträgt und

     -- die einen Innenleiter (19) aufweist,

       --- welcher Innenleiter (19) zur Erhöhung des Wellenwiderstandes einen Leiterabschnitt (45, 45`) mit einer von einer Zylinderform abweichenden Geometrie aufweist.

2. Füllstandsmeßgerät nach Anspruch 1, bei dem der Leiterabschnitt (45, 45`) ein Wendelleiter ist.

3. Füllstandsmeßgerät nach Anspruch 2, bei dem die Anzahl Windungen, die der Wendelleiter pro Längeneinheit aufweist (n`), in wellenleiter-zugewandter Richtung hin zunimmt.

4. Füllstandsmeßgerät nach Anspruch 2 oder 3, bei dem der Wendelleiter eine mittlere Anzahl Windungen pro Längeneinheit aufweist, die so gewählt ist, daß der Wellenwiderstand der Einkopplung (15, 15`) im Bereich des Leiterabschnitts (45, 45`) ungefähr gleich der Quadratwurzel eines Produktes des Ausgangswellenwiderstands der elektronischen Schaltung (5) und des Wellenwiderstands des Wellenleiters (17) ist.

5. Füllstandsmeßgerät nach Anspruch 1, bei dem die Einkopplung (15, 15`) eine koaxiale Durchführung mit einem Innenleiter (19) und einem Außenleiter (21) ist,

   - die eine über eine Koaxialleitung (13) mit der elektronischen Schaltung (5) verbundene erste Seite aufweist und

   - die eine zweite Seite aufweist, an der der Innenleiter (19) in den Wellenleiter (17) übergeht.

6. Füllstandsmeßgerät nach Anspruch 5, bei dem die Einkopplung (15, 15`) zur mechanischen Befestigung des Füllstandsmeßgeräts an einem Meßort und zur Befestigung des Wellenleiters (17) dient.

7. Füllstandsmeßgerät nach Anspruch 1, welches eine Empfangs- und Auswerteschaltung (49) aufweist, die die reflektierten Signale (R) empfängt und daraus den Füllstand ermittelt.

FIG.1

EP 1 083 414 A1

FIG. 2

FIG. 3

**Europäisches Patentamt**

## EUROPÄISCHER RECHERCHENBERICHT

Nummer der Anmeldung

EP 99 11 8150

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 875 738 A (ENDRESS HAUSER GMBH CO) 4. November 1998 (1998-11-04) * Spalte 6, Zeile 57 - Spalte 8, Zeile 31; Abbildungen 1,2 * | 1,5-7 | G01F23/284 H01P1/08 |
| A | US 3 824 503 A (MC CRACKEN R) 16. Juli 1974 (1974-07-16) * Spalte 1, Zeile 53 - Spalte 60 * * Spalte 3, Zeile 11 - Zeile 19; Abbildungen * | 1-3 | |
| A | WO 98 25109 A (BERWIND CORP) 11. Juni 1998 (1998-06-11) * Seite 11, Zeile 18 - Zeile 25; Abbildung 7 * | 1,5-7 | |
| A | EP 0 780 664 A (ENDRESS HAUSER GMBH CO) 25. Juni 1997 (1997-06-25) * Abbildungen 2,3,6,11-13 * | 1,5-7 | |
| A | DE 32 14 487 A (LICENTIA GMBH) 27. Oktober 1983 (1983-10-27) * Seite 3, Zeile 15 - Seite 4, Zeile 3 * * Seite 4, Zeile 13 - Zeile 25 * * Seite 8, Zeile 11 - Seite 10, Zeile 31; Abbildungen 2-4 * | 1 | **RECHERCHIERTE SACHGEBIETE (Int.Cl.7)** G01F H01P |

Der vorliegende Recherchenbericht wurde für alle Patentansprüche erstellt

| Recherchenort | Abschlußdatum der Recherche | Prüfer |
|---|---|---|
| DEN HAAG | 25. Februar 2000 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 99 11 8150

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2000

| Im Recherchenbericht angeführtes Patentdokument | Datum der Veröffentlichung | Mitglied(er) der Patentfamilie | Datum der Veröffentlichung |
|---|---|---|---|
| EP 0875738 A | 04-11-1998 | CA 2236630 A<br>JP 2866083 B<br>JP 10320683 A | 02-11-1998<br>08-03-1999<br>04-12-1998 |
| US 3824503 A | 16-07-1974 | KEINE | |
| WO 9825109 A | 11-06-1998 | AU 5510098 A<br>EP 0943103 A | 29-06-1998<br>22-09-1999 |
| EP 0780664 A | 25-06-1997 | US 5661251 A<br>US 5827985 A<br>CA 2192139 A<br>JP 2911843 B<br>JP 9273958 A<br>US 6019007 A<br>US 5992251 A | 26-08-1997<br>27-10-1998<br>20-06-1997<br>23-06-1999<br>21-10-1997<br>01-02-2000<br>30-11-1998 |
| DE 3214487 A | 27-10-1983 | KEINE | |

EPO FORM P0461

Für nähere Einzelheiten zu diesem Anhang : siehe Amtsblatt des Europäischen Patentamts, Nr.12/82